# EUROPÄISCHE PATENTSCHRIFT

(11) **EP 0 662 447 B1**
(45) Veröffentlichungstag und Bekanntmachung des Hinweises auf die Patenterteilung: **25.11.1998**
(21) Anmeldenummer: 95250001.5
(22) Anmeldetag: 03.01.1995
(51) Int. Cl.: C01B 13/11

(54) **Vorrichtung zur Erzeugung von Ozon**
Apparatus for the generation of ozone
Dispositif pour la génération d'ozone

(30) Priorität: 07.01.1994 DE 4400517
(43) Veröffentlichungstag der Anmeldung: 12.07.1995
(73) Patentinhaber: SORBIOS VERFAHRENSTECHNISCHE GERÄTE UND SYSTEME GMBH, D-13355 Berlin (DE)
(72) Erfinder: Stiehl, Hans-Henrich, D-14167 Berlin (DE); Schweckendiek, Jürgen, D-14057 Berlin (DE); Beständig, Herbert, D-12055 Berlin (DE)
(74) Vertreter: Pfenning, Meinig & Partner

(56) Entgegenhaltungen:
- EP-A- 0 386 471
- WO-A-93/00161
- DE-A- 3 731 168
- DATABASE WPI Section Ch, Week 8244 Derwent Publications Ltd., London, GB; Class E36, AN 82-94054E & JP-A-57 156 306 ( TOKYO SHIBAURA ELEC LTD) , 27.September 1982
- OZONIA 'Commercial scale generation and use of ozone' * Seite 5; Abbildung *

## Beschreibung

Die Erfindung betrifft eine Vorrichtung zur Erzeugung von Ozon nach dem Oberbegriff des Hauptanspruchs.

Ozongeneratoren, die nach dem Prinzip der stillen elektrischen Entladung aus einem sauerstoffhaltigen Gas Ozon erzeugen, sind seit langem bekannt. Die traditionelle Anordnung besteht aus zwei Elektroden, die in der Regel durch ein Dielektrikum getrennt sind. Zwischen mindestens einer der Elektroden und dem Dielektrikum besteht aus Gasspalt, durch den sauerstoffhaltiges Gas geführt wird. Eine von außen auf die Elektrode aufgeprägte Wechselspannung wird soweit erhöht, daß eine Entladung zwischen Dielektrikum und zumindest einer der Elektroden einsetzt. In der Entladung werden Sauerstoffmoleküle gespalten und es wird atomarer Sauerstoff gebildet. Durch Reaktion von atomarem Sauerstoff mit molekularem Sauerstoff wird Ozon erzeugt.

Die Möglichkeit, leistungsstarke Ozongeneratoren zu bauen, wird dadurch bestimmt, daß der Teil der elektrischen Energie, der in Wärme umgewandelt wird, schnell und zuverlässig aus der Entladungszone herausgeführt wird. Bei traditionellen Ozongeneratoren wurde unter anderem zu diesem Zweck der Gasspalt vermindert; der Gasspalt ist für den Wärmeübergang auf das Kühlmedium in der Regel der "geschwindigkeitsbestimmende Schritt". Bei der technischen Herstellung von Ozongeneratoren sind hierbei Grenzen gegeben, die sich aus der Einhaltung von Fertigungstoleranzen ergeben. So müssen bei der Herstellung von Röhrenozongeneratoren (Welsbach-Typ) zumindest zwei Rohre über die gesamte Länge auf einen gleichmäßigen Abstand gehalten werden. In den letzten Jahren wurden Ozongeneratoren bekannt (DE 37 31 168), bei denen zumindest eine Elektrode direkt auf das Dielektrikum aufgebracht ist, wodurch das Dielektrikum unmittelbar zum begrenzenden Mittel zwischen Gas- und Kühlmittelraum wird. Der Gasraum, der der Entladung ausgesetzt wird, liegt in der unmittelbaren Nähe des Dielektrikums, das vom Kühlmedium umgeben ist. Die Entladung, die zur Ozonbildung führt, kann als Oberflächenentladung bezeichnet werden. Das gasführende Rohr wirkt in diesem Fall als Dielektrikum, das aus Keramik besteht.

Ein wesentlicher Nachteil derartiger bekannter Anordnungen ist, daß für die Herstellung einer geeigneten Kühlung die Keramikrohre mechanisch mit dem Kühlsystem (in der Regel Wasser) und der Gasführung verbunden werden müssen. Durch ein geschickt ausgeführtes System mechanischer Verschraubungen und elastischer Dichtungen lassen sich technisch erfolgreich Ozongeneratoren herstellen. Allerdings sind mechanische Dichtungen in Herstellung und Fertigung aufwendig.

Die Herstellung von Keramikrohren mit hinreichend geringen Toleranzen, um die Keramikrohre mechanisch zu verschrauben, stellt hohe Anforderungen an die Herstellungstechnik oder Nachbearbeitung der Keramik. In speziellen Anwendungsgebieten, zum Beispiel bei der Herstellung von Ozongeneratoren für die Halbleiterfertigung, werden zudem erhöhte Anforderungen an die Leckdichtigkeit und Partikelerzeugung gestellt. Mit mechanischen Verschraubungen und elastischer Dichtungselemente lassen sich diese Anforderungen nur mit hohem Aufwand erreichen.

In den bekannten Ozongeneratoren wird das gasführende Keramikrohr stets mit einem Ringspalt umgeben, durch den zur Erzielung einer gleichmäßigen Kühlung mit hoher Wandgeschwindigkeit (vorteilhafter Wärmeübergang) das Kühlmedium geführt wird.

Einfacher wäre die Zusammenfassung mehrerer Entladungsrohre in einem gemeinsamen umgebenden Hüllrohr nach Art eines Rohrwärmebündeltauschers. Dem steht entgegen, daß der Abstand der Einzelrohre durch deren mechanische Verschraubungen und Dichtungselemente bestimmt wird. Zu jedem einzelnen Entladungsrohr entsteht durch diesen erzwungenen Abstand ein "Kovolumen" im Wärmetauscher, das sich negativ auf die Intensität der Kühlung auswirkt, wenn es "zu groß" ist. Das "Kovolumen" wird später hinsichtlich seiner Definition beschrieben. Zur Erzielung einer guten Kühlung muß in diesem Falle entweder der Kühlwasservolumenstrom stark erhöht werden, um eine vergleichbare durchschnittliche Wandgeschwindigkeit (Wärmeübergang) zu erzielen, wie bei der Anordnung mit einem begrenzenden Ringspalt. Dann wird der spezifische Kühlwasserverbrauch S (erforderlicher Kühlwasserdurchfluß (m³/h) bezogen auf die erzielte Ozonproduktion (g/h)) hoch, wobei technische Werte bei 1,5 bis 5 m³/kg liegen. Oder es wird mit einem vorgegebenen Kühlwasserbedarf (m³/kg) bezogen auf die Ozonproduktion durchströmt, wobei in einer Anordnung von mehreren Entladungsrohren in einem gemeinsamen ummantelnden Rohr die Wandgeschwindigkeit gering und damit der Wärmeübergang im Vergleich zur Ringspaltanordnung ungünstiger wird.

JP-A-57156306 beschreibt einen Ozongenerator, der eine Mehrzahl von röhrenförmigen Elektroden aus Stahl aufweist, an die Hochspannung angelegt ist. Die Stahlröhren sind mit Stirnplatten verschweißt. Um eine Korrosion der Schweißbereiche zu vermeiden, ist eine Opferelektrode an jeder Stirnplatte oder der Innenfläche eines um jede Elektrode herum angeordneten Kühlbereichs vorgesehen.

Der Erfindung liegt die Aufgabe zugrunde, eine Vorrichtung zur Erzeugung von Ozon zu schaffen, die eine kompakte Anordnung bietet und gute Kühlung gewährleistet, ohne die Probleme der Korrosion aufkommen zu lassen.
Diese Aufgabe wird erfindungsgemäß durch die kennzeichnenden Merkmale des Hauptanspruchs in Verbindung mit den Merkmalen des Oberbegriffs gelöst.

Dadurch, daß die das Dielektrikum der Vorrichtung zur Erzeugung von Ozon bildenden Keramikrohre in jeweils ein Formteil aus Keramik mittels oxidischen Glas- oder Keramikloten eingefügt sind und daß ein Hüllrohr die Keramikrohre umgreift und gegen die Formteile aus Keramik abgedichtet ist, wird eine kompakte Anordnung für die Vorrichtung zur Erzeugung von Ozon erzielt.

Es kann eine sehr viel bessere Ausnutzung des gemeinsamen Kühlwasservolumens erreicht werden, wenn die Keramikrohre durch den Lötprozeß in den als Gasverteilerplatten dienenden Formteilen dicht nebeneinander befestigt werden, wobei im Lötprozeß Temperaturen zwischen 300 bis 1500° C angewendet werden.

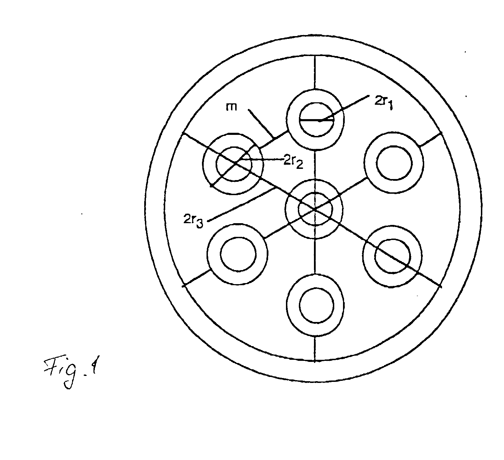

Mit der erfindungsgemäßen Vorrichtung lassen sich hohe Packungsdichten erzielen, wobei die entsprechen den Kovolumina bei einer rohrbündelförmigen Ausführung z.B. 50 bis 60 · 10⁻⁶ m³ statt etwa 250 · 10⁻⁶ m³ bei Verwendung mechanischer Verschraubungen betragen (siehe Fig. 1 in Tabelle 1).

Durch die Verwendung derartiger oxidischer Lote lassen sich Leckraten von weniger als 10⁻⁹ mbar*l/s erzielen, was den Anforderungen zum Beispiel von Ozonanwendungen in der Halbleitertechnik entgegenkommt.

Die Auswahl der Lote beeinflußt gleichfalls die metallischen Verunreinigungen, die mit einer entsprechenden Anordnung erzielt werden. Bei Ozongeneratoren, die in der Halbleiterfertigung Anwendung finden, müssen auch Spurenverunreinigungen mit Schwermetallen vermieden werden. Durch die Wahl von den erfindungsgemäßen Loten, in denen keine kritischen Schwermetalle verwendet werden, lassen sich solche Verunreinigungen im aus dem Ozongenerator austretenden Gas vermeiden bzw. auf einige ppb und weniger vermindern.

Wenn Lote verwendet werden, die bei einer zweiten Verlötung einen höheren Schmelzpunkt aufweisen als bei der ersten, können, bei entsprechender Konstruktion der Vorrichtung Lötstellen unterschiedlicher Orientierung in mehreren Schritten gelötet werden. Entsprechend können verschieden komplexe Grade einerdurch Lot gefügten Anordnung erzeugt werden.

Ausführungsbeispiele der Erfindung sind in der Zeichnung dargestellt und werden in der nachfolgenden Beschreibung näher erläutert. Es zeigen:
- Fig. 1: einen Querschnitt durch ein als Lochplatte ausgebildetes Formteil aus Keramik zur Veranschaulichung der in der Beschreibung und in Tabelle 1 bezeichneten Maße,
- Fig. 2: eine Teildarstellung der erfindungsgemäßen Vorrichtung nach einem ersten Ausführungsbeispiel in perspektivischer Ansicht, und
- Fig. 3: eine Ansicht des Ausführungsbeispiels der erfindungsgemäßen Vorrichtung nach Fig. 2.

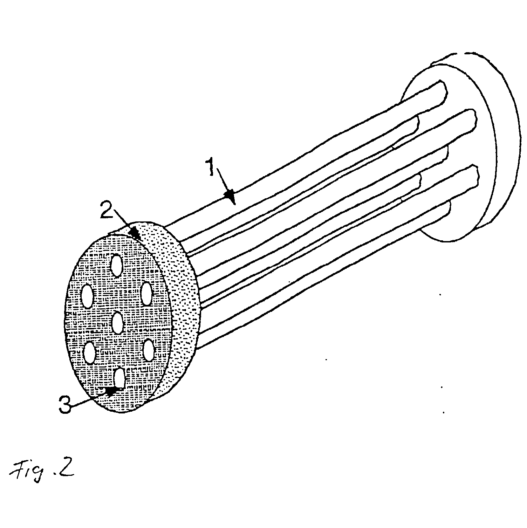

In einer Grundausführung nach Fig. 2 sind eine Mehrzahl von einzelnen Keramikrohren 1 des Ozongenerators mit keramischen Lochplatten 2 verbunden, wobei die Verbindung einerseits formschlüssig und andererseits durch Verlöten der Verbindungsstellen mit einem oxidischen Glas- oder Keramiklot bei Temperaturen zwischen 300 und 1500° C erzielt wird.

Fig. 1 zeigt einen Querschnitt durch die Lochplatte 2 aus Keramik zur Veranschaulichung der im folgenden angegebenen Maße, wobei die Tabelle 1 eine Übersicht über die geometrischen Daten der Kühlung für ein Ausführungsbeispiel mit rohrförmigen Ozonerzeugerelementen mit sieben Rohren mit mechanischen Verschraubungen und durch Löten gefügter Keramik zeigt. Dabei sind:
r 1 der Außenradius des Dielektrikumsrohrs 1,
r 2, der Radius der bei Verwendung mechanischer Verschraubungen eingenommen würde,
m ist ein zusätzlicher Abstand, der zum Beispiel für Werkzeuge oder für das notwendige "Fleisch" zwischen zwei Bohrungen vorzusehen ist,
r 3 ist der Radius, der sich als minimaler Innenradius für ein gemeinsames Hüllrohr ergibt.

In der Tabelle 1 ist weiterhin die Querschnittsfläche des Hüllrohres (πr₃²), die Summe der Querschnittsflächen der Einzelrohre (π·r₁²) sowie der freie Querschnitt und das "Kovolumen" pro 1 m Rohrlänge angegeben, wobei freier Querschnitt und Kovolumen definiert ist zu:
Freier Querschnitt = π ( r₃² - n r₁²),
n: Zahl der Entladungsrohre
Kovolumen = Freier Querschnitt x Länge der Rohre.

Aus der Tabelle ist zu erkennen, daß das "Kovolumen" einer Anordnung von z.B. 7 Keramikrohren bei Verwenung mechanischer Verschraubungen etwa fünfmal so groß ist, wie bei einer erfindungsgemäßen Anordnung, die mit Keramik gefügt ist.

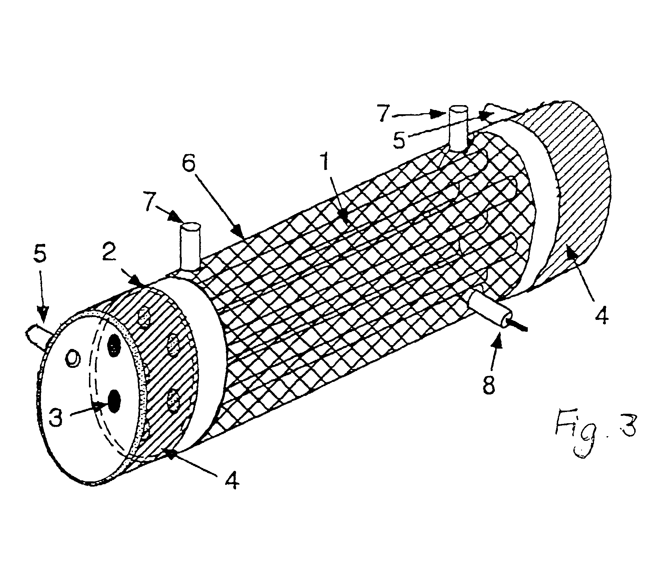

In Fig. 2 ist die Grundausführung dargestellt, die bei verschiedenen Ausführungsbeispielen anwendbar ist. Ein bevorzugtes Ausführungsbeispiel ist in Fig. 3 dargestellt, bei dem die Vielzahl von Keramikrohren 1 von einem gemeinsamen Hüllrohr 6 aus Keramik umschlossen ist, wobei das Hüllrohr 6 durch Löten mit den Lochplatten 2 gefügt ist. In der bevorzugten Ausführungsform sind die Entladungselektroden (nicht dargestellt) der das jeweilige Dielektrikum bildenden Keramikrohre wendelförmig in die Rohre 1 so eingesetzt, daß die wendelförmigen Elektroden gegen die Innenflächen der Keramikrohre 1 drücken. In diesem Fall wird das Gas durch die mit 3 bezeichneten Öffnungen der Keramikrohre 1 in diesen entlanggeführt, und zwischen wendelförmigen Elektroden und entsprechendem Dielektrikum findet eine stille Entladung statt. In das Hüllrohr 6 sind Wasseranschlüsse 7 gleichfalls mit dem Lot eingefügt, wobei das zu- und abgeführte Wasser die Keramikrohre 1 umströmen. Wie aus der Fig. 3 zu erkennen ist, ist an die Lochplatte 2 ein Hohlzylinder 4 angesetzt, der gleichfalls aus Keramik besteht und einstückig mit der Lochplatte verbunden sein kann. Er kann aber auch durch eine Lötung aus einer Lochplatte und einem Hohlzylinder aus Keramik mit Lot gefügt sein. Der Hohlzylinder 4 bildet einen Raum zur Gasverteilung, in den die Öffnungen der Keramikrohre münden. In den Hohlzylinder 4 sind Gasanschlüsse 5 eingelötet. An einer Seite sind Elektrodenanschlüsse 8 zur Zuführung der Hochspannung und gegebenenfalls des Potentials für die Gegenelektrode ebenfalls mit derselben Fügetechnik eingesetzt. Mittels elektrisch leitender Verbindungen wird die außen angelegte Spannung im Gasraum auf die einzelnen Entladungsrohre verteilt. Der Hohlzylinder 4 wird durch einen Deckel, der gleichfalls verlötet ist oder über O-Ringe abgedichtet ist, verschlossen.

Bei dem Ausführungsbeispiel nach Fig. 3 sind alle Anschlüsse und alle Fügestellen durch das oxidische Glas- oder Keramiklot verbunden. Selbstverständlich sind abgewandelte Ausführungsformen je nach Anwendungszweck und gewünschter Konstruktion sinnvoll.

In der Grundausführung werden lediglich die einzelnen Keramikrohre 1 mit keramischen Lochplatten 2 verbunden, die den Gasraum vom Kühlmittelraum trennen. Diese Lochplatten können zur Aufnahme von 0-Ring-Dichtungen mit Nuten am Umfang versehen sein, so daß das Hüllrohr, das mit Zu- und Ablauf für das Kühlmedium versehen ist, beidseits am Umfang gedichtet werden kann. Selbstverständlich sind auch andere Möglichkeiten denkbar, um das Hüllrohr wasserdicht und druckbelastbar zu verschließen, zum Beispiel durch Klebungen. In dieser Ausführungsform wird die Anforderung der Ozonbelastbarkeit für diese Dichtung nicht verlangt. Die Dichtung zwischen Gasraum und Kühlmittel ist durch die beschriebene Verlötung gegeben.

Die keramischen Formteile, in die die Keramikrohre eingesetzt sind und die zur Gasverteilung dienen, können mit solchen Bohrungen versehen sein, daß eine Symmetrierung der Gasströme in den einzelnen Röhren bewirkt wird. Beispielsweise können die Bohrungen als Düsen ausgebildet sein.

Wenn das Hüllrohr für die Kühlwasserbegrenzung aus einem elektrisch leitenden Material hergestellt ist, kann es bei Verwendung eines leitfähigen Kühlmediums selbst als Gegenelektrode für die einzelnen Entladungsrohre dienen. Zusätzlich können aber auch elektrisch leitende Verbindungen zwischen den Einzelrohren und dem Hüllrohr angebracht werden.

Wenn das Hüllrohr für die Kühlwasserbegrenzung aus einem Isolatormaterial hergestellt wird, sind eine Elektrodendurchführung durch dieses Rohr und gegebenenfalls weitere elektrisch leitende Verbindungen zu den Einzelrohren erforderlich.

In dem Ausführungsbeispiel nach Fig. 3 wird der Gasraum durch die keramische Lochplatte 2 und einem zweiten einseitig geschlossenen Rohrabschnitt gebildet, die miteinander verlötet sind. Als Material für den einseitig geschlossenen Rohrabschnitt kommen entsprechend dem Fall des umhüllenden Rohres für den Kühlmittelraum leitende und isolierende ozonfeste Materialien in Frage. Sofern leitende Materialien verwendet werden, zum Beispiel Edelstahl, ergeben sich wegen der Nähe zur Hochspannung, die für die elektrische Entladung erforderlich ist, höhere Anforderungen an Isolationsabstände und Kriechstrecken. Damit wird jedoch die Kompaktheit der Vorrichtung geringer. Dieser Nachteil wird durch die Verwendung von Isolatormaterialien vermieden, allerdings mindern Dichtungselemente, wie Elastomer-O-Ring auch hier die Kompaktheit.

In dem beschriebenen Ausführungsbeispiel wird eine wendelförmige Entladungselektrode in dem Dielektrikum verwendet. Selbstverständlich ist auch eine mittig durch das Keramikrohr hindurchgeführte Innenhochspannungselektrode anwendbar, wobei eine Entladung im Gasspalt zwischen mittiger Entladungselektrode und Keramikrohr als Dielektrikum stattfindet.

In einem weiteren Ausführungsbeispiel kann die Entladungselektrode unter Spannung außen auf dem Keramikrohr sitzen, wobei jedoch dann bei einer Anordnung nach Fig. 3 eine Umkehrung zwischen Kühlmittelraum und gasführenden Räumen stattfindet, das heißt der Gasraum befindet sich dann zwischen dem Hüllrohr und den Keramikröhren, während das Kühlmittel durch die Keramikrohre selbst geführt wird.

Die erfindungsgemäße Vorrichtung hat den Vorteil der Unbrennbarkeit der verwendeten keramischen Komponenten und der Fügestellen. Auch sind diese nicht korrodierbar, ein Vorgang, der selbst bei der Verwendung von hochlegierten Stählen in Verbindung mit hochreinem Sauerstoff oder beim Auftreten von Nebenprodukten der Ozonerzeugung (Feuchte, Stickoxidverbindungen) nicht immer ausgeschlossen werden kann.

**Tabelle 1**

| | | |
|---|---|---|
| Übersicht über die geometrischen Daten der Kühlung für ein Ausführungsbeispiel mit rohrförmigen Ozonerzeugerelementen mit 7 Rohren, a) mit mechanischen Verschraubungen, b) mit durch Löten gefügter Keramik | | |

| Maße entsprechend Fig. 1 | Mechanische Verschraubungen | Keramik, durch Löten gefügt |
|---|---|---|
| r 1- Außenrohrradius der einzelnen Entladungsrohre [m] | 4,00E-03 | 4,00E-03 |
| r 2 - Außenradius der mechanischen Verschraubungen | 7,00E-03 | 0,00E+00 |
| m - Mindestabstand für "Fleisch" bzw. Montagevorrichtungen | 3,00E-03 | 2,00E-03 |
| T - Teilungsmaß, ist mindestens: 2·r2+m | 17,0E-03 | 10,0E-03 |
| r 3 - Mindest Innenradius für gemeinsames Hüllrohr: r3 = 3·T/2 im Fall von 7 Rohren entsprechend Fig.1 [m] | 25,5E-03 | 15,0E-03 |
| Querschnittsfläche des Hüllrohres [m²] | 2,04E-03 | 706,9E-06 |
| Summe der Querschnittsflächen der Einzelrohre [m²] | 351,9E-06 | 351,9E-06 |
| Freier Querschnitt [m²] | 1,69E-03 | 355,0E-06 |
| Kovolumen pro 1m Rohrlänge und Einzelrohr [m³] | 241,6E-06 | 50,7E-06 |

## Patentansprüche

1. Vorrichtung zur Erzeugung von Ozon mit mindestens einem ein Dielektrikum bildendes Keramikrohr, einer an eine Hochspannungsversorgung angeschlossene, dem Keramikrohr zugeordnete Entladungselektrode und einer Gegenelektrode, wobei das mindestens eine Keramikrohr durch ein Kühlmittel gekühlt wird und im Bereich der Entladungselektrode ein sauerstoffhaltiges Gas geführt wird,
**dadurch gekennzeichnet,**
daß das mindestens eine Keramikrohr (1) in jeweils ein Formteil (2) aus Keramik mittels oxidischen Glas- oder Keramikloten eingefügt ist und daß ein Hüllrohr (6) das mindestens eine Keramikrohr (1) umgreift und gegen die Formteile (2) aus Keramik abgedichtet ist.

2. Vorrichtung nach Anspruch 1, dadurch gekennzeichnet, daß eine Mehrzahl von das Dielektrikum bildenden Keramikrohren (1) in die Formteile (2) zur Bildung eines Rohrbündels eingefügt sind.

3. Vorrichtung nach Anspruch 1 oder 2, dadurch gekennzeichnet, daß das Hüllrohr (6) gleichfalls aus Keramik besteht und mit den Formteilen (1) durch oxidische Glas- oder Keramiklote verbunden ist.

4. Vorrichtung nach Anspruch 1 oder 2, dadurch gekennzeichnet, daß das Hüllrohr mit einer Dichtung, wie einer O-Ring-Dichtung gegen die Formteile abgedichtet ist.

5. Vorrichtung nach einem der Ansprüche 1 bis 4, dadurch gekennzeichnet, daß die Entladungselektroden innerhalb der Keramikrohre angeordnet sind, vorzugsweise wendelförmig an der Innenwand derselben anliegen, wobei der Raum zwischen dem Hüllrohr (6) und den Keramikrohren (1) den Kühlmittelraum bildet und Anschlüsse (7) für die Zufuhr und Ableitung des Kühlmittels in dem Hüllrohr (6) vorgesehen sind.

6. Vorrichtung nach einem der Ansprüche 1 bis 4, dadurch gekennzeichnet, daß die vorzugsweise wendelförmig ausgebildeten Entladungselektroden auf der Umfangsfläche der Keramikrohre (1) anliegend angeordnet sind, wobei der Raum zwischen dem Hüllrohr (6) und den Keramikrohren (1) den Gasentladungsraum bildet und Anschlüsse für die Zufuhr und Ableitung des Gases in dem Hüllrohr vorgesehen sind.

7. Vorrichtung nach einem der Ansprüche 1 bis 6, dadurch gekennzeichnet, daß das Formteil (2) als Lochplatte ausgebildet ist.

8. Vorrichtung nach einem der Ansprüche 1 bis 7, dadurch gekennzeichnet, daß das Formteil (2,4) einen Hohlraum aufweist, in den die Keramikrohre (1) münden und daß in dem Formteil (2,4) mindestens ein Anschluß für Gas oder Kühlmittel vorgesehen ist.

9. Vorrichtung nach Anspruch 8, dadurch gekennzeichnet, daß das Formteil als Lochplatte mit angesetztem abgeschlossenem Hohlzylinder ausgebildet ist.

10. Vorrichtung nach einem der Ansprüche 1 bis 9, dadurch gekennzeichnet, daß das Formteil (2,4) mindestens einen Elektrodenanschluß (8) aufweist.

11. Vorrichtung nach einem der Ansprüche 1 bis 10, dadurch gekennzeichnet, daß die Kühlmittelanschlüsse (7) und/oder die Gasanschlüsse (5) und/oder die Elektrodenanschlüsse (8) mittels Glas- oder Keramiklot in das Hüllrohr und/oder die Formteile (2,4) eingelötet sind.

12. Vorrichtung nach einem der Ansprüche 1 bis 11, dadurch gekennzeichnet, daß das Löten mittels Glas- oder Keramikloten bei Temperaturen zwischen 300 bis 1500° C durchführbar sind.

13. Vorrichtung nach einem der Ansprüche 1 bis 12, dadurch gekennzeichnet, daß die Glas- oder Keramiklote zwei Schmelzpunkte aufweisen, wobei der Schmelzpunkt bei einer zweiten Verlötung höher liegt als bei der ersten.

14. Vorrichtung nach einem der Ansprüche 1 bis 13, dadurch gekennzeichnet, daß die keramischen Formteile, in die die Keramikrohre eingesetzt sind und die zur Gasverteilung dienen, mit solchen Bohrungen versehen sind, daß eine Symmetrierung der Gasströme in den einzelnen Röhren bewirkt wird.

15. Vorrichtung nach Anspruch 14, dadurch gekennzeichnet, daß die Bohrungen düsenartig ausgebildet sind.

## Claims

1. Apparatus for generation of ozone, comprising at least one ceramic pipe serving as dielectric, a discharge electrode which is connected to a high-voltage supply and associated with the ceramic pipe and a counter-electrode, and the at least one ceramic pipe is cooled by a cooling medium, and an oxygen containing gas is ducted in the area of the discharge electrode, **characterised in that** the at least one ceramic pipe (1) is inserted into a respective shape (2) of ceramic by means of oxide glass or ceramic solders, and a sleeve pipe (6) encapsulates the at least one ceramic pipe (1) and seals it from ceramic shapes (2).

2. Apparatus according to Claim 1, **characterised in that** a plurality of ceramic pipes (1) which serve as dielectric is inserted into the shapes (2) for the purpose of forming a pipe bundle.

3. Apparatus according to Claim 1 or 2, **characterised in that** the sleeve pipe (6) is also made of ceramic and connected to the shapes (1) but oxide glass or ceramic solders.

4. Apparatus according to Claim 1 or 2, **characterised in that** the sleeve pipe is sealed from the shapes by means of a seal, for example an O-ring seal.

5. Apparatus according to one of Claims 1 to 4, **characterised in that** the discharge electrodes are arranged within the ceramic pipes, preferably helically seated against the inside wall of the latter, and the space between the sleeve pipe (6) and the ceramic pipes (1) forms the central cooling area, and connections (7) for feed and discharge of the cooling medium are provided in the sleeve pipe (6).

6. Apparatus according to one of Claims 1 to 4, **characterised in that** the preferably helical discharge electrodes are arranged to be seated on the peripheral surface of the ceramic pipes (1), and the space between the sleeve pipe (6) and the ceramic pipes (1) forms the gas-discharge area, and connections for feed and discharge of the gas are provided in the sleeve pipe.

7. Apparatus according to one of Claims 1 to 6, **characterised in that** the shape (2) is designed to be a perforated plate.

8. Apparatus according to one of Claims 1 to 7, **characterised in that** the shape (2, 4) comprises a cavity into which merge the ceramic pipes (1), and in the shape (2, 4) is provided at least one connection for gas or cooling medium.

9. Apparatus according to Claim 8, **characterised in that** the shape is designed to be a perforated plate with thereto attached sealed hollow cylinder.

10. Apparatus according to one of Claims 1 to 9, **characterised in that** the shape (2, 4) comprises at least one electrode connection (8).

11. Apparatus according to one of Claims 1 to 10, **characterised in that** the cooling medium connections (7) and/or the gas connections (5) and/or the electrode connections (8) are soldered into the sleeve pipe and/or the shapes (2, 4) by means of glass or ceramic solder.

12. Apparatus according to one of Claims 1 to 11, **characterised in that** soldering is executable by means of glass or ceramic solders at temperatures between 300 and 1,500°C.

13. Apparatus according to one of Claims 1 to 12, **characterised in that** the glass or ceramic solders have two melting points, and the melting point is higher during second soldering than in the first.

14. Apparatus according to one of Claims 1 to 13, **characterised in that** the ceramic shapes into which the ceramic pipes are inserted and which serve the gas distribution are provided with bores which achieve symmetrisation of the gas flows in the individual pipes.

15. Apparatus according to Claim 14, **charactersied in that** the bores are designed like nozzles.

## Revendications

1. Dispositif de production d'ozone comprenant au moins un tube céramique, constituant un diélectrique, une électrode de décharge, associée au tube céramique et raccordée à une alimentation haute tension, et une contre-électrode, au moins un tube céramique étant refroidi au moyen d'un agent de refroidissement et un gaz contenant de l'oxygène étant acheminé dans la zone de l'électrode de décharge,
caractérisé en ce que le tube céramique (1), en au moins un exemplaire, est à chaque fois assemblé, en y pénétrant, avec une pièce de forme (2) en céramique, au moyen d'une soudure de verre ou de céramique oxydante, et en ce qu'un tube enveloppe (6) entoure le tube céramique (1), en au moins un exemplaire, et son étanchéité est assurée par rapport aux pièces de forme (2) en céramique.

2. Dispositif suivant la revendication 1, caractérisé en ce que plusieurs tubes céramiques (1) constituant le diélectrique sont assemblés, en y pénétrant, dans les pièces de forme (2) pour former un faisceau tubulaire.

3. Dispositif suivant la revendication 1 ou 2, caractérisé en ce que le tube enveloppe (6) est également en céramique et est rendu solidaire des pièces de forme (1) au moyen de soudures de verre ou de céramique oxydantes.

4. Dispositif suivant la revendication 1 où 2, caractérisé en ce que l'étanchéité du tube enveloppe par rapport aux pièces de forme est assurée à l'aide de moyens d'étanchéité, tels qu'un joint torique d'étanchéité.

5. Dispositif suivant l'une des revendications 1 à 4, caractérisé en ce que les électrodes de charge sont disposées à l'intérieur des tubes céramiques, en étant de préférence appliquées en forme d'hélice sur la paroi intérieure de ceux-ci, tandis que l'espace situé entre le tube enveloppe (6) et les tubes céramiques (1) constitue la chambre d'agent de refroidissement et qu'il est prévu des raccords (7) pour l'arrivée et l'évacuation de l'agent de refroidissement dans le tube enveloppe (6).

6. Dispositif suivant l'une des revendications 1 à 4, caractérisé en ce que les électrodes de décharge, de préférence réalisées en forme d'hélice, sont appliquées sur la surface périphérique des tubes céramiques (1), tandis que l'espace situé entre le tube enveloppe (6) et les tubes céramiques (1) constitue la chambre de décharge de gaz et qu'il est prévu des raccords pour l'arrivée et l'évacuation du gaz dans le tube enveloppe.

7. Dispositif suivant l'une des revendications 1 à 6, caractérisé en ce que la pièce de forme (2) est réalisée en forme de plaque perforée.

8. Dispositif suivant l'une des revendications 1 à 7, caractérisé en ce que la pièce de forme (2, 4) comporte une cavité dans laquelle les tubes céramiques (1) débouchent et en ce qu'au moins un raccord est prévu pour le gaz ou l'agent de refroidissement dans la pièce de forme (2, 4).

9. Dispositif suivant la revendication 8, caractérisé en ce que la pièce de forme est réalisée en forme de plaque perforrée comportant, monté sur elle, un cylindre creux fermé.

10. Dispositif suivant l'une des revendications 1 à 9, caractérisé en ce que la pièce de forme (2, 4) comporte au moins un raccordement d'électrode (8).

11. Dispositif suivant l'une des revendications 1 à 10, caractérisé en ce que les raccords d'agent de refroidissement (7) et/ou les raccords de gaz (5) et/ou les raccordements d'électrode (8) sont soudés, en y pénétrant, au tube enveloppe et/ou aux pièces de forme (2,4) au moyen d'une soudure de verre ou de céramique.

12. Dispositif suivant l'une des revendications 1 à 11, caractérisé en ce que les soudures peuvent être effectuées, au moyen de soudure de verre ou de céramique, à des températures comprises entre 300 et 1500 °C.

13. Dispositif suivant l'une des revendications 1 à 12, caractérisé en ce que les soudure de verre ou de céramique possèdent deux points de fusion, le point de fusion lors d'une seconde soudure étant plus élevé que lors de la première.

14. Dispositif suivant l'une des revendications 1 à 13, caractérisé en ce que les pièces de forme céramiques, dans lesquelles les tubes céramiques sont emboîtés et qui servent à la répartition du gaz, sont pourvues de trous tels qu'une symétrie des flux de gaz dans les différents tubes est assurée.

15. Dispositif suivant la revendication 14, caractérisé en ce que les trous sont réalisés en forme de buses.
